# EUROPEAN PATENT APPLICATION

(11) **EP 4 835 531 A1**
(43) Date of publication of application: **04.11.2026**
(21) Application number: 26173453.7
(22) Date of filing: 20.04.2026
(51) Int. Cl.: G02B 6/44

(54) **ROTATABLE TRAY RAMP FOR FIBER OPTIC TERMINALS**

(30) Priority: 30.04.2025 US 202563797345 P
(71) Applicant: Corning Research & Development Corporation, Corning, New York 14831 (US)
(72) Inventor: YATES, Laina Ewing, North Carolina, 28601 (US); ZAPPEK, Andreas, 46539 Dinslaken (DE)
(74) Representative: Reddie & Grose LLP

(57) **Abstract**

The present disclosure relates to a fiber optic terminal having a rotatable tray ramp upon which a splice tray or a patch tray may be mounted. The rotatable tray ramp is moveable between a storage position and an access position. In the storage position, access to the components underneath the mounted splice tray or patch tray is limited within the fiber optic terminal. In the access position, the components underneath the mounted splice tray or patch tray are accessible within the fiber optic terminal.

## Description

### PRIORITY CLAIM

This application claims the benefit of priority of U.S. Provisional Patent Application Serial No. 63/797,345 filed on April 30, 2025, the content of which is relied upon and incorporated herein by reference in its entirety.

### FIELD

The present disclosure relates to fiber optic terminal components and more particularly, to a rotatable tray ramp for fiber optic terminals.

### BACKGROUND

Fiber optic terminals for telecommunication networks, such as multi-dwelling unit (MDU) terminals, are designed with different solutions and technologies to connect or split optical fiber signals - such as splicing or patching, for example. Since fiber optic terminals often need to house many splice and patch connections, space needs to be allocated within the fiber optic terminal for these connections in what is often referred to as a fiber management section. Because a fiber management section can have significant spatial requirements within the fiber optic terminal, it can be difficult access to splice protectors and connectors that are used to establish the connections.

Fiber optic terminals are also designed with different solutions and technologies for the fiber management section. For example, various types of patch panels or adapter banks are available. However, known fiber management devices that include patch panels or adapter banks commonly face a number of drawbacks.

For example, known fiber management devices do not typically include any mechanisms for parking of unused fiber optic connectors. Often this is because of the lack of space to accommodate such additional features within the fiber optic terminal, especially in smaller terminals with more compact configurations.

In fiber management devices where dedicated spaces for parking unused connectors are provided, it can prove difficult to access the parking locations within the fiber optic terminal, and parked connectors can often collide with other components inside the fiber optic terminal. Further, such parking mechanisms often require additional optical fiber slack to be introduced, to allow movement of the fiber optic connector from the operational location (e.g. a fiber optic adapter) to the parking location, especially when there are multiple possible in use locations within the terminal (e.g. multiple adapters located at numerous points on a patch panel). Such additional slack is undesirable, as it can impede access to other components within the fiber optic terminal. The extra slack can be stored within a dedicated storage location within the fiber management device or terminal, however this will take up additional space within the terminal.

Improved fiber management apparatuses and terminals are desired that enable greater access to interior components within the fiber optic terminal along with an efficient parking mechanism of unused fiber optic connectors.

### SUMMARY

In general, the present disclosure relates to a fiber optic terminal having a rotatable tray ramp upon which a splice tray or a patch tray may be mounted. The rotatable tray ramp is moveable between a storage position and an access position. In the storage position, access to the components underneath the mounted splice tray or patch tray is limited within the fiber optic terminal. In the access position, the components underneath the mounted splice tray or patch tray are accessible within the fiber optic terminal.

In one embodiment, a fiber optic terminal is provided. The fiber optic terminal comprising: a body defining a fiber optic terminal interior; an internal plate in the fiber optic terminal interior, wherein the internal plate includes a splitter section configured to receive at least one optical splitter and an overlength storage section separate from the splitter section; at least one splice tray rotatably coupled to the internal plate, wherein the at least one splice tray is rotatable between a closed position and an open position; wherein in the closed position, the at least one splice tray covers the splitter section on the internal plate; wherein in the open position, the at least one splice tray does not cover at least a portion of the splitter section on the internal plate; a rotatable tray ramp rotatably coupled to the internal plate, wherein the rotatable tray ramp is moveable between a storage position and an access position; at least one patch tray coupled to the rotatable tray ramp, wherein the at least one patch tray is rotatable about the rotatable tray ramp between a horizontal position and a vertical position; wherein when the patch tray is in the vertical position and the rotatable tray ramp is in the storage position, the overlength storage section of the optical enclosure is accessible.

In another embodiment, the rotatable tray ramp is arranged at an angle that ranges from about 0° to about 120° relative to the internal plate. In another embodiment, in the storage position, the rotatable tray ramp is arranged at an angle that ranges between about 0° and about 45° relative to the internal plate; and wherein in the access position, the rotatable tray ramp is arranged at an angle that ranges between about 45° and about 120° relative to the internal plate. In another embodiment, when the patch tray is in the horizontal position, the patch tray at least partially covers the overlength storage section of the internal plate. In another embodiment, when the at least one patch tray is in the horizontal position, an angle of the at least one patch tray relative to an axis of the rotatable tray ramp ranges between about 45° and about 90°. In another embodiment, when the at least one patch tray is in the vertical position and the rotatable tray ramp is in the access position, the at least one patch tray is arranged at an angle relative to an axis of the rotatable tray ramp ranging between about 90° and about 135°.

In one embodiment, a fiber optic terminal is provided. The fiber optic terminal comprising: a body defining a fiber optic terminal interior; an internal plate in the fiber optic interior, wherein the internal plate includes a splitter section configured to receive at least one optical splitter and an overlength storage section separate from the splitter section; a first rotatable tray ramp rotatably coupled to the internal plate, wherein the first rotatable tray ramp moveable between a first storage position and a first access position; at least one splice tray rotatably coupled to the first rotatable tray ramp, wherein the at least one splice tray is rotatable about the first rotatable tray ramp between a closed position and an open position; wherein in the closed position, the at least one splice tray covers the splitter section on the internal plate; wherein in the open position, the at least one splice tray does not cover at least a portion of the splitter section on the internal plate; a second rotatable tray ramp rotatably coupled to the internal plate, wherein the second rotatable tray ramp is moveable between a second storage position and a second access position; at least one patch tray coupled to the second rotatable tray ramp, wherein the at least one patch tray is rotatable about the second rotatable tray ramp between a horizontal position and a vertical position; wherein when the patch tray is in the vertical position and the rotatable tray ramp is in the storage position, the overlength storage section of the optical enclosure is accessible.

In another embodiment, the first rotatable tray ramp is arranged at a first angle that ranges from 0° to 120° relative to the internal plate; and wherein the second rotatable tray ramp is arranged at a second angle that ranges from 0° to 120° relative to the internal plate. In another embodiment, in the first storage position, the first angle of the first rotatable tray ramp ranges between 0° and 45° relative to the internal plate; wherein in the first access position, the first angle of the first rotatable tray ramp ranges between 45° and 120° relative to the internal plate; and wherein in the second storage position, the second angle of the second rotatable tray ramp ranges between 0° and 45° relative to the internal plate; and wherein in the second access position, the second angle of the second rotatable tray ramp ranges between 45° and 120° relative to the internal plate. In another embodiment, when the at least one patch tray is in the horizontal position, an angle of the at least one patch tray relative to an axis of the second rotatable tray ramp ranges between about 45° and about 90°. In another embodiment, when the at least one patch tray is in the vertical position and the second rotatable tray ramp is in the access position, the at least one patch tray is arranged at an angle relative to an axis of the second rotatable tray ramp ranging between about 90° and about 135°.

In one embodiment, a fiber optic terminal is provided. The fiber optic terminal comprising: a body defining a fiber optic terminal interior; an internal plate in the fiber optic terminal interior; a rotatable tray ramp rotatably coupled to the internal plate; and at least one connection tray coupled to the tray ramp; wherein the rotatable tray ramp includes a first channel and a second channel on a first edge and a second edge of the rotatable tray ramp, respectively, and the first channel and the second channel are configured to direct optical fibers to the at least one connection tray that is coupled to the rotatable tray ramp.

In another embodiment, the first channel and the second channel each further include a plurality of directing guides, wherein each of the plurality of directing guides are configured to direct the optical fibers to a specific tray of the at least one connection tray that is coupled to the rotatable tray ramp. In another embodiment, the internal plate includes a splitter section configured to receive at least one optical splitter; the at least one connection tray comprises at least one splice tray rotatably coupled to the internal plate, wherein the at least one splice tray is rotatable relative to the rotatable tray ramp between a closed position and an open position; in the closed position, the at least one splice tray covers the splitter section positioned on the internal plate; in the open position, the at least one splice tray does not cover at least a portion of the splitter section on the internal plate. In another embodiment, the rotatable tray ramp is arranged at an angle that ranges from about 0° to about 120° relative to the internal plate. In another embodiment, in a storage position, the rotatable ramp is arranged at an angle that ranges between about 0° and about 45° relative to the internal plate; and wherein in an access position, the rotatable ramp is arranged at an angle that ranges between about 45° and about 120° relative to the internal plate. In another embodiment, the at least one connection tray comprises at least one patch tray coupled to the rotatable tray ramp, wherein the at least one patch tray is rotatable about the rotatable tray ramp between a horizontal position and a vertical position. In another embodiment, when the at least one patch tray is in the horizontal position, an angle of the at least one patch tray relative to an axis of the rotatable tray ramp ranges between about 45° and about 90°. In another embodiment, when the at least one patch tray is in the vertical position and the rotatable tray ramp is in the access position, the at least one patch tray is arranged at an angle relative to an axis of the rotatable tray ramp ranging between about 90° and about 135°.

Additional features and advantages are set forth in the Detailed Description that follows, and in part will be readily apparent to those skilled in the art from the description or recognized by practicing the embodiments as described in the written description and claims hereof, as well as the appended drawings. It is to be understood that both the foregoing general description and the following Detailed Description are merely exemplary, and are intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the Detailed Description serve to explain principles and operation of the various embodiments. As such, the disclosure will become more fully understood from the following Detailed Description, taken in conjunction with the accompanying Figures, in which:
FIG. 1 is a perspective view of a fiber optic terminal in a closed position in accordance with the present disclosure;
FIG. 2 is a perspective view of the fiber optic terminal of FIG. 1 in an open position in accordance with the present disclosure;
FIG. 2A is a perspective view of the fiber optic terminal of FIG. 2 with many of internal components removed to illustrate an internal plate within an interior of the fiber optic terminal;
FIG. 3 is a front, perspective view of a rotatable tray ramp for the fiber optic terminal of FIG. 1;
FIG. 4 is a rear, perspective view of the rotatable tray ramp of the rotatable tray ramp of FIG. 3 for the fiber optic terminal of FIG. 1;
FIG. 5 is a perspective view of a patch tray for the fiber optic terminal of FIG. 1;
FIG. 6 is a perspective view of the patch tray of FIG. 5 illustrating the routing of optical fibers and connectors within the patch tray;
FIG. 7 is a perspective view of an alternate patch tray for the fiber optic terminal of FIG. 1 in accordance with the present disclosure;
FIG. 8 is a perspective view of the alternate patch tray of FIG. 7 illustrating the routing of optical fibers and connectors within the patch tray;
FIG. 9 is a perspective view of an alternate embodiment of an interior of the fiber optic terminal of FIG. 1 where a second rotatable tray ramp is included in accordance with the present disclosure;
FIGS. 10-13A are perspective views of the fiber optic terminal of FIG. 1 illustrating a method of operation of the fiber optic terminal of FIG. 1; and
FIGS. 14-17 are perspective views of the alternate fiber optic terminal of FIG. 9 illustrating a method of operating the fiber optic terminal of FIG. 9.

### DETAILED DESCRIPTION

Various embodiments will be clarified by examples in the description below. In general, the present disclosure relates to a fiber optic terminal having a rotatable tray ramp upon which a splice tray or a patch tray may be mounted. The rotatable tray ramp is moveable between a storage position and an access position. In the storage position, access to the components underneath the mounted splice tray or patch tray is limited within the fiber optic terminal. In the access position, the components underneath the mounted splice tray or patch tray are accessible within the fiber optic terminal.

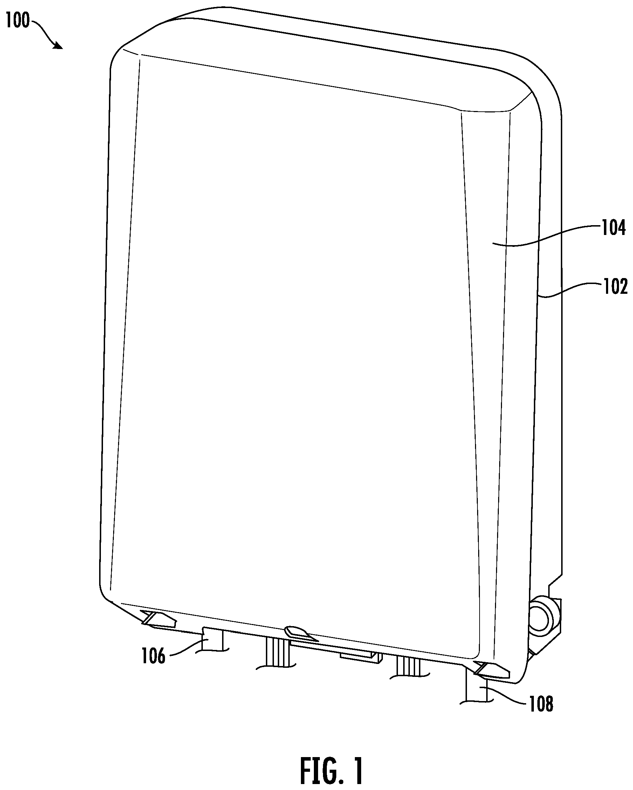

Referring first to FIG. 1, an example fiber optic terminal 100 is shown where the fiber optic terminal 100 may be installed within a communications network (e.g., on a building, other structure, or otherwise within a network). The fiber optic terminal 100 includes a back portion 102 and a cover 104, which in FIG. 1 is shown as being in a closed position. The fiber optic terminal 100 also includes an inlet feeder cable 106 that enters the fiber optic terminal 100 at a first location (e.g., on the left) and an outlet feeder cable 108 that exits the fiber optic terminal 100 at a second location (e.g., on the right). It should be appreciated that, in other embodiments, the inlet feeder cable 106 and/or the outlet feeder cable 108 may enter or exit the fiber optic terminal 100 at any other location, and further, in some embodiments, the inlet feeder cable 106 and/or the outlet feeder cable 108 may enter and exit at a same location.

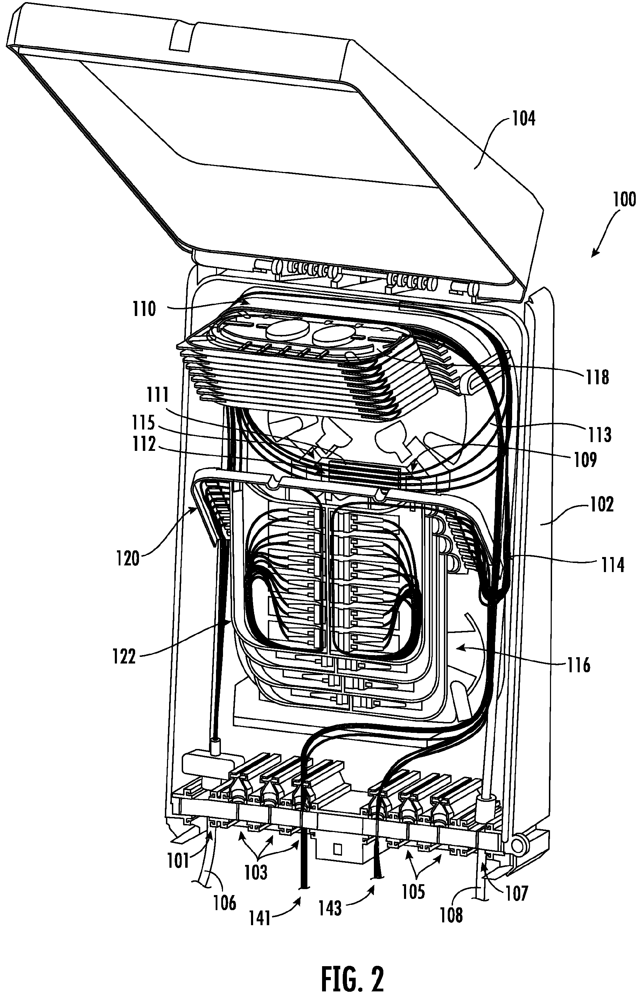

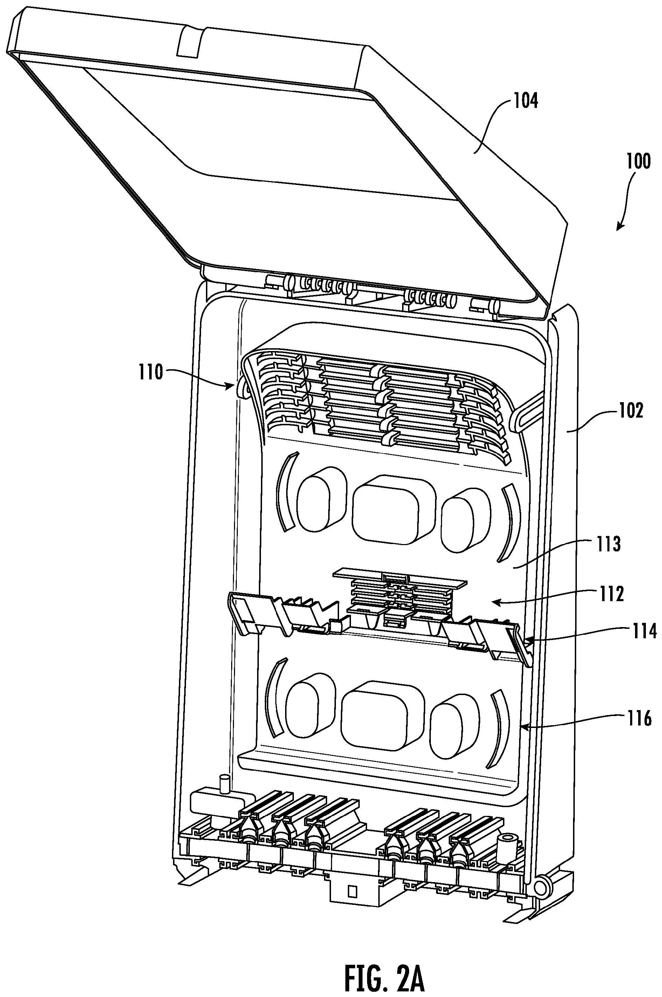

Referring now to FIG. 2, the fiber optic terminal 100 is shown with the cover 104 in an open position The fiber optic terminal 100 defines a first cable port entry 101 at one end of the fiber optic terminal 100, second cable port entries 103 adjacent to the first cable port entry 101, a third cable port entry 107 at another end of the fiber optic terminal 100, and fourth cable port entries 105 adjacent to the third cable port entry 107. Some of the cable port entries shown are configured to receive the inlet feeder cable 106, while others are configured to receive the outlet feeder cable 108 or other optical fiber cables (e.g., cables 141, 143) depending on the application. While eight cable port entries are shown in FIG. 2, it is within the scope of the present disclosure that an alternate number of cable port entries may be used within the fiber optic terminal 100 depending on the application.

The fiber optic terminal 100 comprises an internal plate 113, at least one splice tray 118 (several are shown in FIG. 2), at least one rotatable tray ramp 120, and at least one patch tray 122 (several are shown in FIG. 2). With reference to FIG. 2A, the internal plate 113 is seated within an interior of fiber optic terminal 100. Internal plate 113 includes an attachment section 110, a splitter section 112, a connection feature 114, and an overlength storage section 116. In some embodiments, internal plate 113 is coupled to a base of the fiber optic terminal 100 within an interior of the fiber optic terminal 100. In some embodiments, internal plate 113 is integrally formed within an interior of the fiber optic terminal 100.

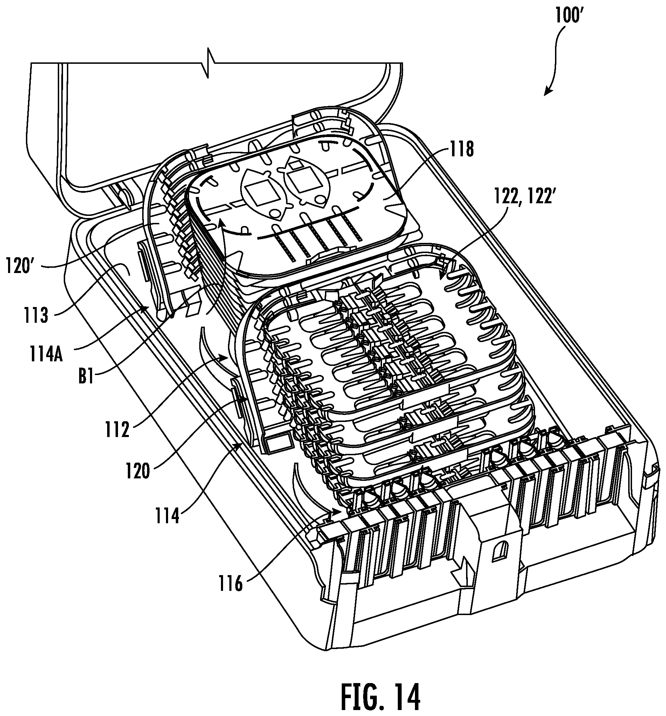

The attachment section 110 is configured to couple the splice trays 118 to the internal plate 113 such that the splice trays 118 are each rotatable about the attachment section 110 between an open position and a closed position as discussed in greater detail herein. In some embodiments, the attachment section 110 comprises additional connection features 114A (FIG. 14) to accommodate a second rotatable tray ramp 120' (FIG. 14).

Splitter section 112 is configured to store at least one splitter 111 on internal plate 113. Spliced fibers 109 from the splice trays 118 are routed into respective splitters 111 (as input optical fibers of splitters 111), and output fibers 115 of splitter 111 are routed through the fiber optic terminal 100 to the patch trays 122. The output optical fibers 115 are connectorized on one end so as to be part of respective pigtail cable assemblies. Each splitter 111 may split the optical signal carried by an input optical fiber 111 into multiple output optical signals (e.g., 4, 8, 16, 32, 64 optical signals) carried by respective pigtail assemblies, which are ultimately patched (i.e., connected / optically coupled) to other cable assemblies in patch trays 122. While the above description describes cables and/or optical fibers being spliced in the splice trays 118 and then split in the splitters 111 and then patched within patch trays 122, it is within the scope of the present disclosure that alternate combinations of splicing, splitting, and patching may occur on input cables and/or optical fibers within fiber optic terminal 100 (e.g., splice-split-splice, patch-split-patch, splice-patch-split-patch, or splice-patch-split-patch-splice, etc.).

Connection feature 114 of the internal plate 113 is configured to couple the rotatable tray ramp 120 to internal plate 113. In particular, and as discussed in greater detail below, connection feature 114 enables rotatable tray ramp 120 to couple with the internal plate 113 and to rotate about internal plate 113 between a storage position and an access position. In some embodiments, rotatable tray ramp 120 is coupled to the connection feature 114 in a snap fit configuration. However, it is within the scope of the present disclosure that alternate coupling configurations between the rotatable tray ramp 120 and the connection feature 114 may be used.

Overlength storage section 116 of the internal plate 113 is configured to store excess optical fibers or optical cables within the fiber optic terminal 100. As shown, and as will be described in greater detail below, the overlength storage section 116 can be at least partially covered by the patch trays 122 when the patch trays 122 are in a horizontal position and can be accessible when the patch trays 122 are in a vertical position.

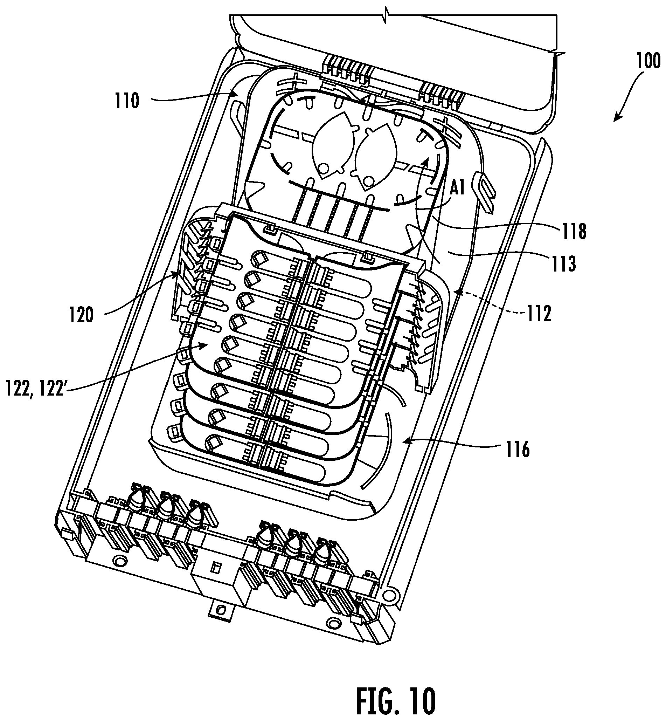

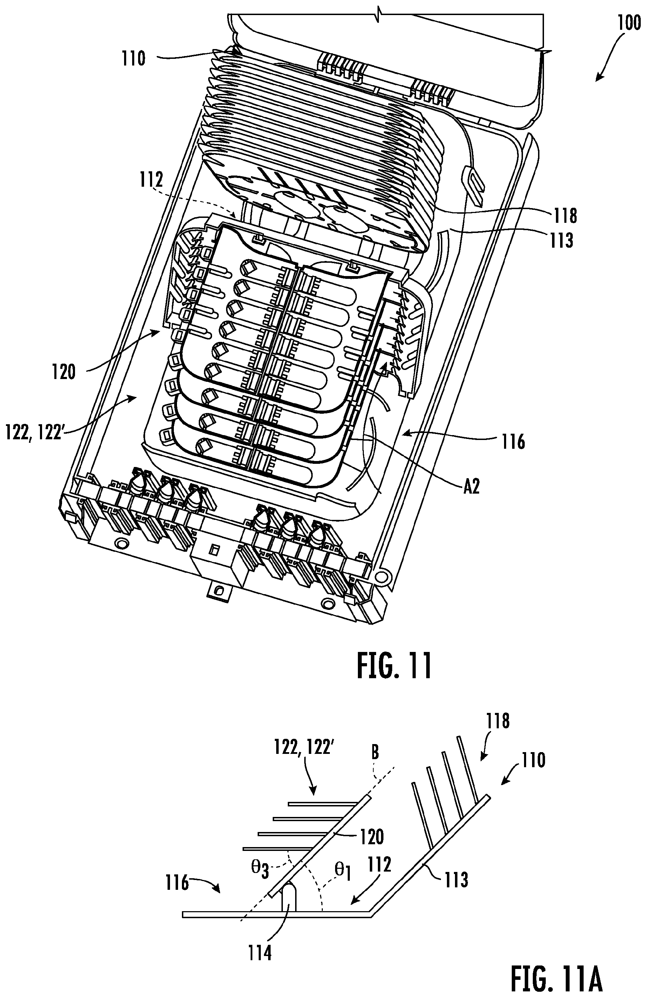

Now that a general overview of the components of the fiber optic terminal 100 has been provided, the components and their interaction will be described in further detail. As mentioned above, each of the splice trays 118 is configured to provide an area where input optical fibers and output optical fibers are joined or spliced together. Each splice tray 118 is coupled to the attachment section 110 of internal plate 113 and can rotate about the attachment section 110 between the open position and the closed position. In the open position (as shown in FIGS. 2 and 11), the splice trays 118 are moved (rotated about attachment section 110 of internal plate 113) such that splitter section 112 is accessible. That is, the body of the splice trays 118 are moved (rotated about the attachment section 110 of the internal plate 113) to a position where the bodies of the splice trays 118 are distal to the internal plate 113, thereby providing accessibility to the splitter section 112 as shown. Conversely, in the closed position (as shown in at least FIG. 10), the splice trays 118 cover the splitter section 112, and the splitter section 112 is inaccessible. Stated another way, the bodies of the splice trays 118 are moved to a position where the bodies of the splice trays 118 are proximate to the internal plate 113 in comparison to the previous open position.

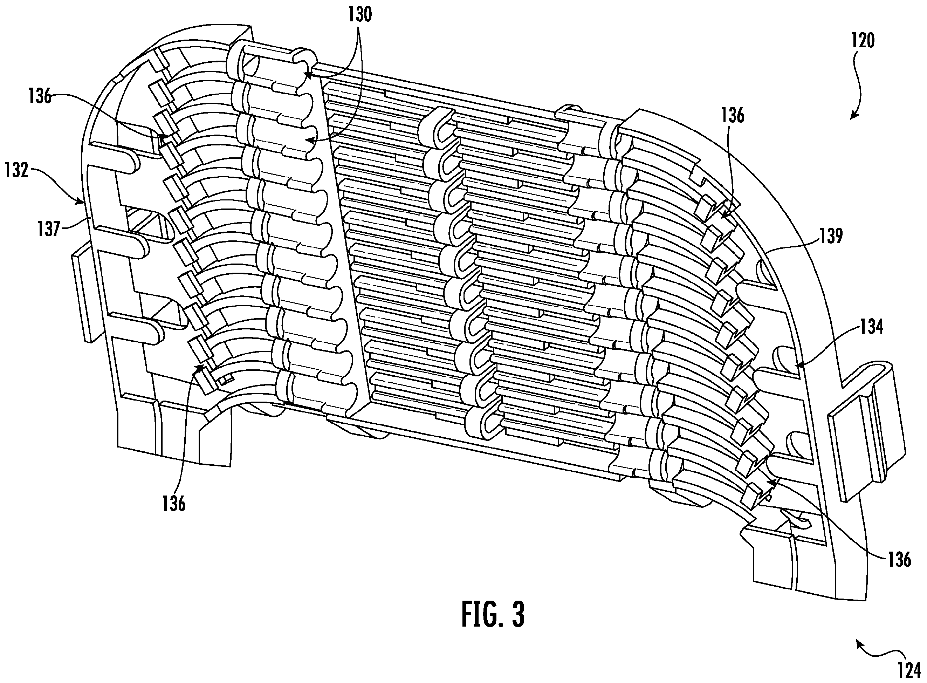

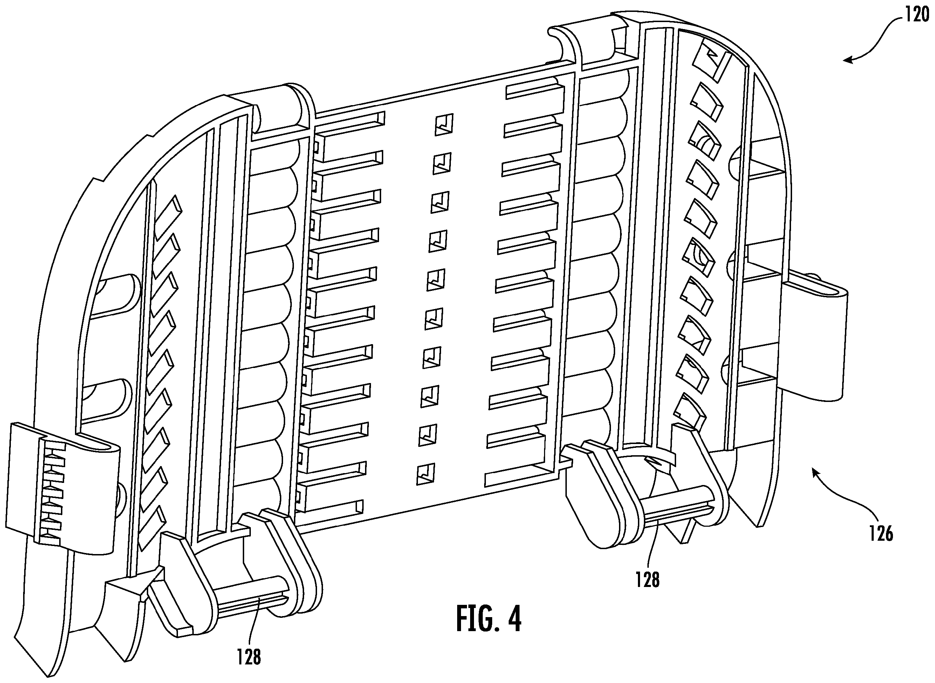

Rotatable tray ramp 120 is coupled to the connection feature 114 of the internal plate 113 and rotates about the internal plate 113 as mentioned previously. Referring now to FIGS. 3 and 4, rotatable tray ramp 120 includes a front side 124 and a rear side 126, respectively. A front side 124 of rotatable tray ramp 120 includes connection grooves 130, first channel 132, and second channel 134. Connection grooves 130 are configured to each receive a respective patch tray 122 such that each patch tray 122 can be rotatably coupled to the rotatable tray ramp 120. As discussed further herein, patch trays 122 are rotatable about the rotatable tray ramp 120 between a horizontal position and a vertical position, which can toggle access to the overlength storage section 116 as discussed in greater detail below.

The front side 124 of the rotatable tray ramp 120 provides the first channel 132 and the second channel 134 on a first edge 137 and a second edge 139, respectively, as shown in FIG. 3. The channels 132, 134 each provide a pathway for optical fibers within fiber optic terminal 100 to be directed into the rotatable tray ramp 120. Optical fibers that are fed into the rotatable tray ramp 120 (via channels 132, 134) are then directed to the corresponding patch trays 122 that are coupled to the rotatable tray ramp 120 by directing guides 136. In this way, optical fibers are routed to the correct patch tray 122 within fiber optic terminal 100.

While the above description has been directed to coupling the patch trays 122 to the front side 124 of the rotatable tray ramp 120, it is within the scope of the present disclosure that other components may be coupled to the rotatable tray ramp 120. For example, in some embodiments, the splice trays 118 may be coupled to the front side 124 of the rotatable tray ramp 120 within the connection grooves 130. Also, in another embodiment, a combination of the splice trays 118 and the patch trays 122 may be coupled to the front side 124 of the rotatable tray ramp 120 within the connection grooves 130.

Referring now to FIG. 4, a rear side 126 of the rotatable ramp 120 includes connection bars 128 that are configured to couple to connection features 114 of the internal plate 113 such that the rotatable tray ramp 120 can be rotatably coupled to the internal plate 113. Stated another way, connection bars 128 are configured to couple to connection features 114 such that the rotatable tray ramp 120 can pivot or rotate about the internal plate 113. Connection bars 128 may be coupled to the connection features 114 in a snap fit configuration as mentioned previously with respect to rotatable tray ramp 120 and internal plate 113.

As mentioned previously, rotatable tray ramp 120 is rotatable about the internal plate 113 between a storage position and an access position. In the storage position, the patch trays 120 that are coupled to the rotatable tray ramp 120 may move between a horizontal position and a vertical position as discussed in greater detail herein where the patch trays 120 cover the overlength storage section 116 in the storage position. In the access position, the patch trays 120 can be fully moved between the horizontal position and the vertical position, the latter of which provides access to the overlength storage section 116 as discussed in greater detail below.

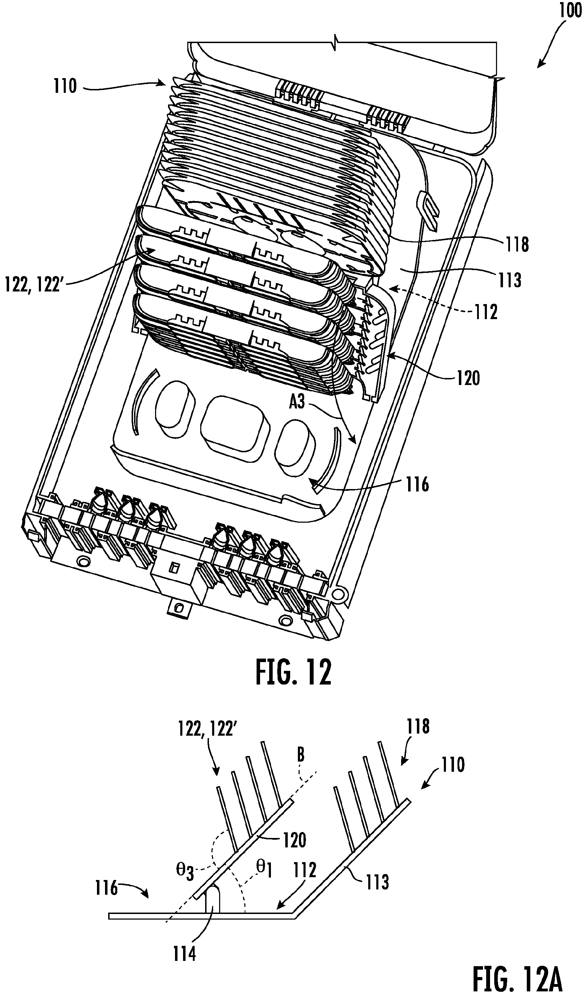

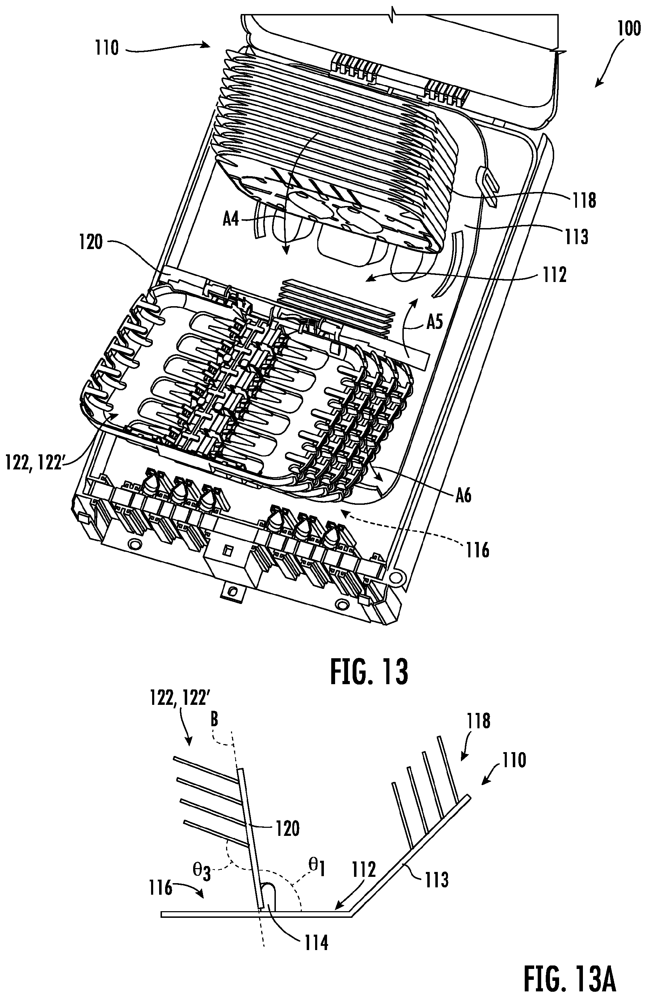

The rotatable tray ramp 120 is angled relative to the internal plate 113 of the fiber optic terminal 100. With brief reference to FIGS. 12A and 13A, the rotatable tray ramp 120 has an angle Θ₁ ranging from about 0° to about 120° relative to the internal plate 113. In some embodiments, in the storage position, as shown in FIG. 12A, the rotatable tray ramp 120 has an angle Θ₁ ranging from about 0° to about 45° relative to the internal plate 113. In some embodiments, in the access position, as shown in FIG. 13A, the rotatable tray ramp 120 has an angle Θ₁ ranging from about 45° to about 120° relative to the internal plate 113.

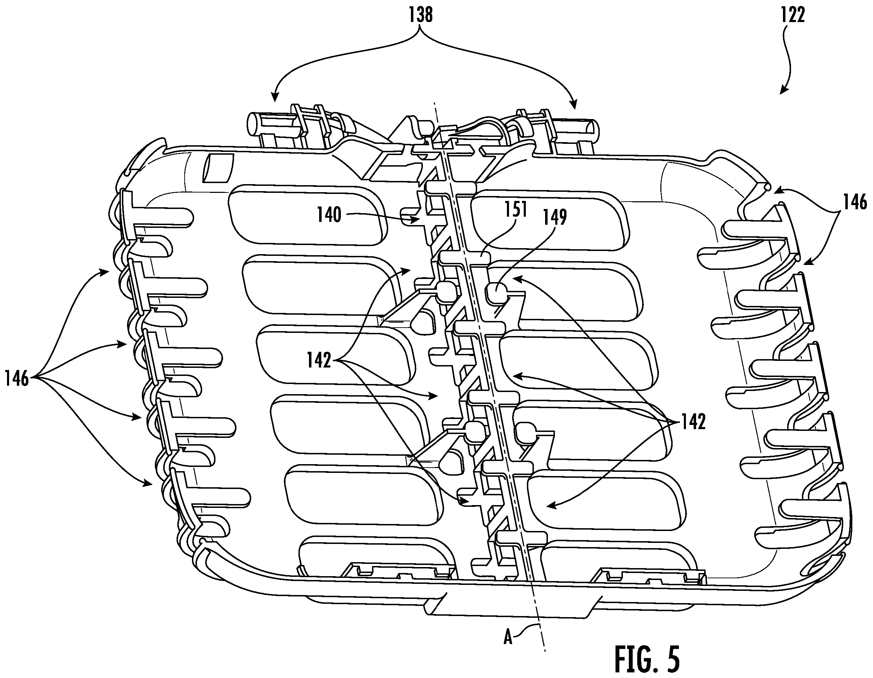

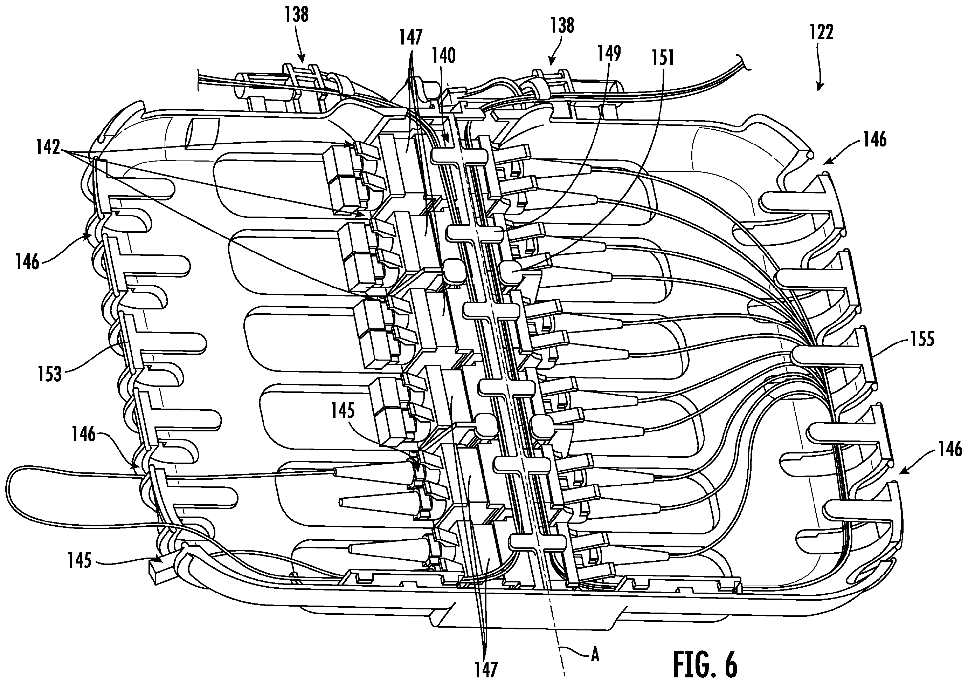

Referring now to FIG. 5, a representative patch tray 122 that couples to the rotatable tray ramp 120 within the fiber optic terminal 100 is shown. Patch tray 122 is configured to provide an area where connections between connectorized input optical fibers and connectorized output optical fibers within the fiber optic terminal 100 can be made. Patch tray 122 comprises a coupling structure 138, a central channel 140, and a parking location 146. Coupling structure 138 couples the patch tray 122 to the rotatable tray ramp 120 by engaging with the connection grooves 130 (FIG. 3) of the rotatable tray ramp 120 when coupling the patch tray 122 to the rotatable tray ramp 120. The coupling structure 138 also provides a path to route optical fibers from channels 132, 134 (FIG. 3) of the rotatable tray ramp 120 and directing guides 136 of the rotatable tray ramp 120 into an interior of the patch tray 122 as shown in FIG. 6.

Central channel 140 is a channel provided in the interior of the patch tray 122 that intersects or is in communication with the coupling structure 138. Central channel 140 cooperates with the coupling structure 138 to move optical fibers from the coupling structure 138 into the interior of the patch tray 122. That is, the central channel 140 routes the incoming optical fibers into various regions within the interior of the patch tray 122 as shown in FIG. 6. Central channel 140 is bounded by adapters 147 (FIG. 6) that are received within adapter recesses 142 and boundary structures 149, 151 that are configured to contain incoming optical fibers within central channel 140. In particular, in the embodiment shown, the central channel 140 is defined by the top surface of inserted adapters 147 and the boundary structures 149, 151 that are spaced from adapters 147 as shown. Other structures and/or components, however, are also possible for defining a central channel in alternative embodiments.

As shown in FIGS. 5 and 6, parking locations 146 are located at edges 153, 155 of the patch tray 122. Although FIG. 6 illustrates representative optical connectors 145 in some of the adapters 147, any optical connector 145 intended for patching can be parked facing away from the adapters 147 in the parking locations 146. In some embodiments, parking locations 146 function as an aperture through which optical fibers can be fed through to enter and exit the patch tray 122 as shown. Parking locations 146 are angled relative to a central axis A of the central channel 140. In some embodiments, parking locations 146 are substantially perpendicular to the central axis A of central channel 140.

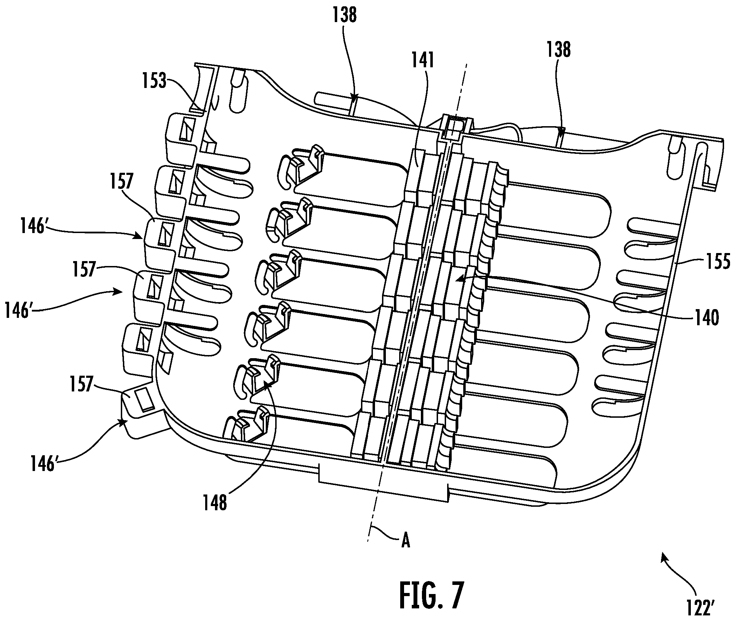

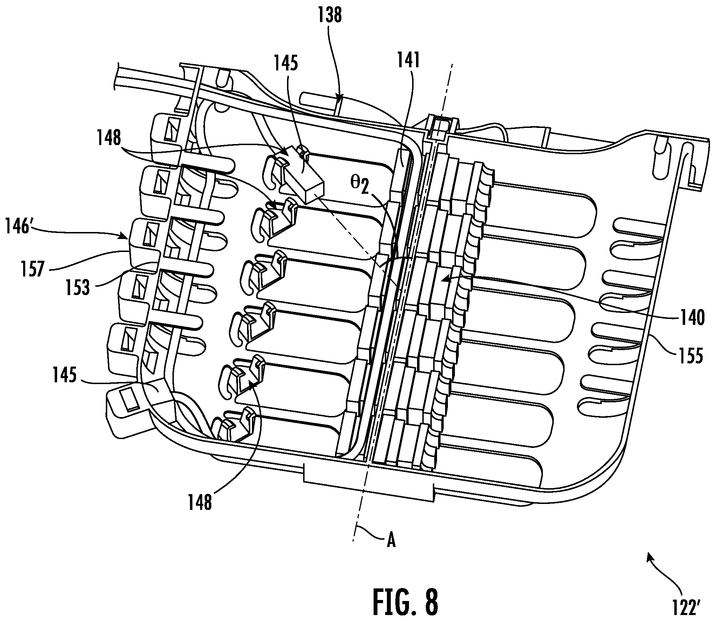

Referring briefly to FIGS. 7 and 8, an alternate patch tray 122' is shown. Patch tray 122' is substantially the same as patch tray 122 except as noted herein. Like patch tray 122, patch tray 122' includes parking locations 146' on edges 153, 155. Parking locations 146' each include an extension 157 from edge 153 or 155 that provides a recess into which an optical connector 145 may be parked as shown in FIG. 8. Patch tray 122' further includes additional parking locations 148 for optical connectors. As shown in FIGS. 7 and 8, parking locations 148 are each located within the interior of the patch tray 122' where an optical connector 145 can be parked at an angle Θ₂ relative to the central axis A of central channel 140. That is, the parking locations 148 are angled relative to a central axis A of the central channel 140. In some embodiments, the parking locations 148 have an angle Θ₂ ranging from between about 30° to about 45° relative to the central axis A of the central channel 140. In some embodiments, the parking locations 146' are substantially perpendicular to the central axis A of the central channel 140.

As mentioned previously, the patch tray 122 is coupled to the rotatable tray ramp 120 so that the patch tray 122 is rotatable about the rotatable tray ramp 120 between a horizontal position and a vertical position. As shown in at least FIGS. 2 and 11, in the horizontal position, the patch tray 122 covers at least a portion of the overlength storge section 116. By contrast, as shown in FIG. 12, in the vertical position, the patch tray 122 does not cover the entirety of overlength storage section 116, thereby making the overlength storage section 116 accessible in this configuration.

Referring briefly to FIG. 12A, when moving the patch trays 122, 122' between the horizontal and vertical positions, the patch trays 122, 122' are angled with respect to rotatable tray ramp 120. In some embodiments, each patch tray 122, 122' is angled at an angle Θ₃ ranging between about 45° to about 135° relative to an axis B of the rotatable tray ramp 120 when patch tray 122, 122' is moved between the horizontal position and the vertical positions. In some embodiments, in the horizontal position (FIG. 11A), patch trays 122, 122' are angled at an angle Θ₃ ranging between about 35° to about 45° relative to an axis B of the rotatable tray ramp 120. In some embodiments, in the vertical position (FIG. 12A), patch trays 122, 122' are angled at an angle Θ₃ ranging between about 90° to about 135° relative to an axis B of the rotatable tray ramp 120

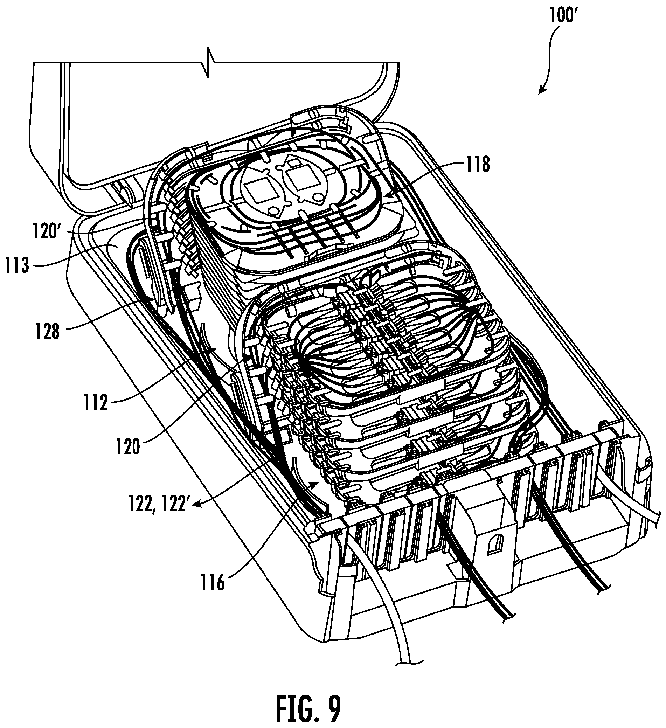

Referring briefly to FIG. 9, an alternate fiber optic terminal 100' is shown. Fiber optic terminal 100' is substantially the same as fiber optic terminal 100 except as noted herein. In this embodiment, attachment section 110 of fiber optic terminal 100 is replaced with a second rotatable ramp 120', and the splice trays 118 are coupled to the front side 124 of the rotatable tray ramp 120'. The rotatable tray ramp 120' is rotatably coupled to the internal plate 113 and is movable between a storage position and an access position like rotatable tray ramp 120 as discussed herein. When the rotatable tray ramp 120' is moved to the access position, there is space to enable optical cable routing behind rotatable tray ramp 120' within fiber optic terminal 100'. In this embodiment, the rotatable tray ramps 120, 120' each have an angle Θ₁ ranging from about 0° to about 120° relative to the internal plate 113 of the fiber optic terminal 100. In some embodiments, in the storage positions, as shown in FIG. 14, the rotatable tray ramps 120, 120' each have an angle Θ₁ ranging from about 0° to about 45° relative to the internal plate 113 of the fiber optic terminal 100. In some embodiments, in the access positions, the rotatable tray ramps 120, 120' each have an angle Θ₁ ranging from about 45° to about 120° relative to the internal plate 113 of the fiber optic terminal 100.

Referring now to FIGS. 10-13A, a method of opening the fiber optic terminal 100 to access the splitter section 112 and the overlength storage section 116 is shown. As shown, in this embodiment, the fiber optic terminal 100 includes a singular rotatable tray ramp 120 with an internal plate 113 as discussed with reference to at least FIG. 2. To access the splitter section 112, the splice trays 118 are moved along direction A1 where the splice trays 118 rotate about the attachment section 110 to move from the storage position to the access position resulting in the positioning shown in FIG. 11. In the configuration shown in FIG. 11, the splitter section 112 is partially accessible as the rotatable tray ramp 120 partially blocks access to the splitter section 112. Therefore, to access the splitter section 112, the rotatable tray ramp 120 needs to be moved into the access position as discussed below.

To move the rotatable tray ramp 120, the patch trays 122, 122' are moved along direction A2 (i.e., rotated about the rotatable tray ramp 120) to transition from the horizontal position of FIG. 11 to the vertical position as shown in FIG. 12. In this configuration as shown in FIG. 12, the splitter section 112 remains partially accessible, and the overlength storage section 116 is accessible with the movement of the patch trays 122, 122'. In some embodiments, the patch trays 122, 122' are moved into the vertical position along direction A2 prior to and independent of moving the splice trays 118 as discussed above with respect to FIG. 10. Stated another way, the patch trays 122, 122' can be moved into the vertical position along direction A2 to give access to the overlength storage section 116 without first moving the splice trays 118.

In particular, with brief reference to FIG. 11A, angle Θ₃ of patch trays 122, 122' relative to axis B of the rotatable tray ramp 120 ranges between about 30° and about 45° in the configuration of FIG. 11. Also, in this configuration shown in FIG. 11, angle Θ₁ of the rotatable tray ramp 120 relative to the internal plate 113 ranges between about 30° and about 45°. When the patch trays 122, 122' are moved into the configuration of FIG. 12, angle Θ₃ of the patch trays 122, 122' relative to axis B of the rotatable tray tramp 120 ranges between about 90° and about 135°. Also, in this configuration, shown in FIG. 12, angle Θ₁ of the rotatable tray ramp 120 relative to the internal plate 113 ranges between about 90° and about 135°.

After moving the patch trays 122, 122' to the vertical position, the rotatable tray ramp 122 is then moved along direction A3 to the access position resulting in the configuration of FIG. 13. In this configuration, the overlength storage section 116 is partially accessible while the splitter section 112 is accessible since the rotatable tray ramp 120 and the splice trays 118 do not cover the splitter section 112. In addition, as shown in FIG. 13A, angle Θ₃ of the patch trays 122, 122' relative to axis B of the rotatable tray ramp 120 ranges between about 90° and about 135° in the configuration of FIG. 13. Also, in this configuration shown in FIG. 13, angle Θ₁ of the rotatable tray ramp 120 relative to the internal plate 113 ranges between about 90° and about 135°.

To return the splice trays 118, the rotatable tray ramp 120, and the patch trays 122, 122' to their original positions, the splice trays 118 are moved along direction A4 to move the splice trays 118 to the closed position. Then, the rotatable tray ramp 120 is moved along direction A5 to move the rotatable tray ramp 120 to the storage position. Then, the patch trays 122, 122' are moved along direction A6 to move the patch trays 122, 122' from the vertical position to the horizontal position.

In an alternative embodiment, to return the splice trays 118, the rotatable tray ramp 120, and the patch trays 122, 122' to their original positions, the rotatable tray ramp 120 is moved to the storage position. Then, the patch trays 122, 122' are moved along from the vertical position to the horizontal position. Then, the splice trays 118 are moved to the closed position.

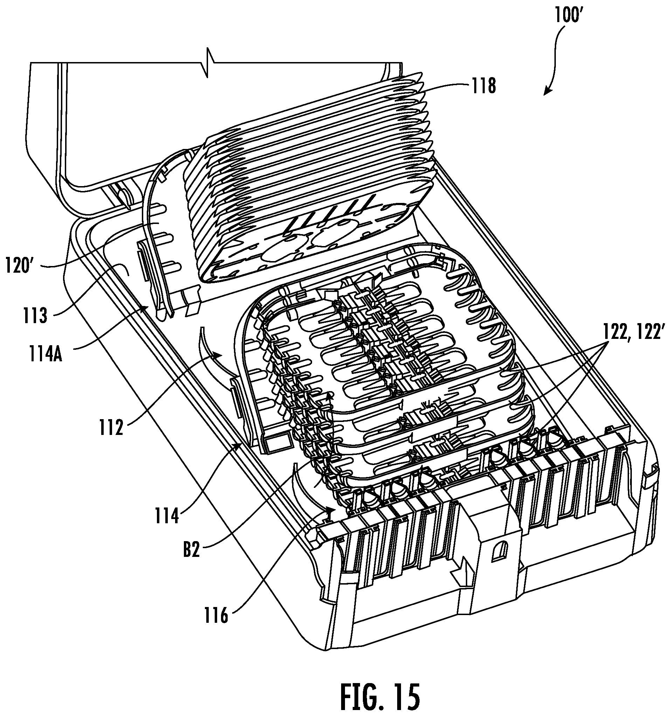

Referring now to FIGS. 14 to 17, a method of opening the fiber optic terminal 100' to access the splitter section 112 and the overlength storage section 116 is shown. As shown, in this embodiment, the fiber optic terminal 100 includes a singular rotatable tray ramp 120 with an internal plate 113 as discussed with reference to at least FIG. 2. As mentioned previously, the fiber optic terminal 100' differs from the fiber optic terminal 100 in that attachment section 110 is replaced by a second rotatable ramp 120' coupled to the interior of the fiber optic terminal 100 by a connection feature 114. To access the splitter section 112, the splice trays 118 are moved along direction B1 where the splice trays 118 rotate about the rotatable tray ramp 120' to move from the closed position to the open position resulting in the positioning shown in FIG. 15. In the configuration shown in FIG. 15, the splitter section 112 is partially accessible where the rotatable tray ramp 120 partially blocks access to the splitter section 112. Therefore, to the access splitter section 112, the rotatable tray ramp 120 needs to be moved into the access position as discussed below.

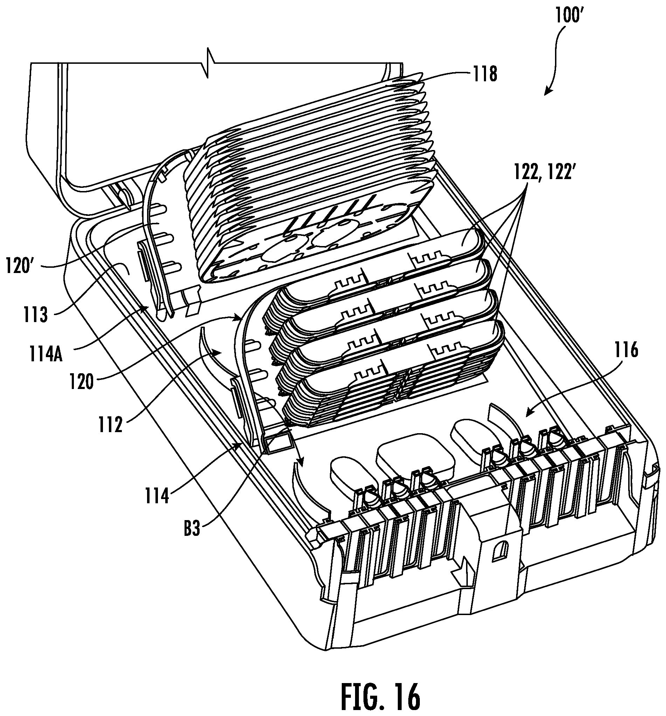

To move the rotatable tray ramp 120, the patch trays 122, 122' are moved along direction B2 (i.e., rotated about the rotatable tray ramp 120) to transition from the horizontal position to the vertical position as shown in FIG. 16. In this configuration as shown in FIG. 16, the splitter section 112 remains partially accessible, and the overlength storage section 116 is accessible with the movement of the patch trays 122, 122'. In some embodiments, the patch trays 122, 122' are moved into the vertical position along direction B2 prior to and independent of moving the splice trays 118 along direction B1 as discussed above. Stated another way, the patch trays 122, 122' can be moved into the vertical position along direction B2 to give access to the overlength storage section 116 after which moving the splice trays 118 are moved along direction B1.

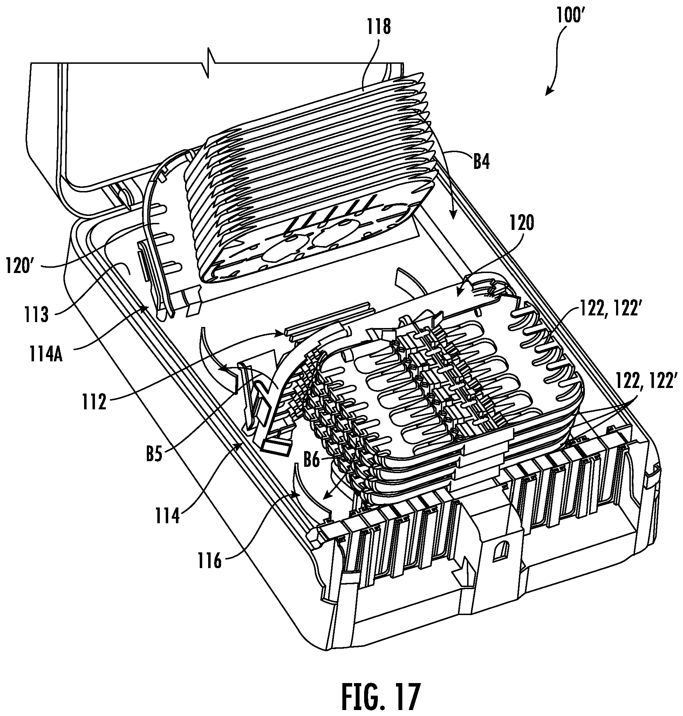

After moving the patch trays 122, 122' to the vertical position, the rotatable tray ramp 120 is then moved along direction B3 to the access position as shown in FIG. 17. In this configuration, the overlength storage section 116 is partially accessible while the splitter section 112 is accessible since the rotatable tray ramp 120 and the splice trays 118 do not cover the splitter section 112.

To return the splice trays 118, the rotatable tray ramp 120, 120', and the patch trays 122, 122' to their original positions, the splice trays 118 are moved along direction B4 to move the splice trays 118 to the closed position. Then, the rotatable tray ramp 120 is moved along direction B5 to move the rotatable tray ramp 120 to the storage position. Then, the patch trays 122, 122' are moved along direction B6 to move the patch trays 122, 122' from the vertical position to the horizontal position.

In an alternative embodiment, to return the splice trays 118, the rotatable tray ramp 120, 120', and the patch trays 122, 122' to their original positions, the rotatable tray ramp 120 is moved to the storage position. Then, the patch trays 122, 122' are moved from the vertical position to the horizontal position. Then, the splice trays 118 are moved to the closed position.

While not expressly disclosed, it is within the scope of the present disclosure that the movement of the rotatable tray ramps 120, 120' and the corresponding angles of the rotatable tray ramps 120, 120' relative to the interior of the fiber optic terminal 100 and relative to the patch trays 122, 122' and/or the splice trays 118 are substantially similar to the movement of the rotatable tray ramp 120 and the corresponding angles relative to the internal plate 113 and relative to the patch trays 122, 122' as described above in relation to FIGS. 10-13A.

It will be apparent to those skilled in the art that various modifications to the preferred embodiments of the disclosure as described herein can be made without departing from the spirit or scope of the disclosure as defined in the appended claims.

Thus, the disclosure covers the modifications and variations provided they come within the scope of the appended claims and the equivalents thereto.

## Claims

1. A fiber optic terminal comprising:
a body defining a fiber optic terminal interior;
an internal plate in the fiber optic terminal interior, wherein the internal plate includes a splitter section configured to receive at least one optical splitter and an overlength storage section separate from the splitter section;
at least one splice tray rotatably coupled to the internal plate, wherein the at least one splice tray is rotatable between a closed position and an open position;
wherein in the closed position, the at least one splice tray covers the splitter section on the internal plate;
wherein in the open position, the at least one splice tray does not cover at least a portion of the splitter section on the internal plate;
a rotatable tray ramp rotatably coupled to the internal plate, wherein the rotatable tray ramp is moveable between a storage position and an access position;
at least one patch tray or at least one splice tray coupled to the rotatable tray ramp, wherein the at least one patch tray is rotatable about the rotatable tray ramp between a horizontal position and a vertical position;
wherein when the patch tray is in the vertical position and the rotatable tray ramp is in the storage position, the overlength storage section of the optical enclosure is accessible.

2. The fiber optic terminal of claim 1, wherein the rotatable tray ramp is arranged at an angle that ranges from about 0° to about 120° relative to the internal plate.

3. The fiber optic terminal of claim 2, wherein in the storage position, the rotatable tray ramp is arranged at an angle that ranges between about 0° and about 45° relative to the internal plate; and
wherein in the access position, the rotatable tray ramp is arranged at an angle that ranges between about 45° and about 120° relative to the internal plate.

4. The fiber optic terminal of any of claims 1-3, wherein when the patch tray or the splice tray is in the horizontal position, the patch tray or the splice tray at least partially covers the overlength storage section of the internal plate.

5. The fiber optic terminal of any of claims 1-4, wherein when the at least one patch tray or the at least one splice tray is in the horizontal position, an angle of the at least one patch tray or the at least one splice tray relative to an axis of the rotatable tray ramp ranges between about 45° and about 90°.

6. The fiber optic terminal of any of claims 1-5, wherein when the at least one patch tray or the at least one splice tray is in the vertical position and the rotatable tray ramp is in the access position, the at least one patch tray is arranged at an angle relative to an axis of the rotatable tray ramp ranging between about 90° and about 135°.

7. The fiber optic terminal of any of claims 1-6 comprising:
wherein the rotatable ramp comprises:
a first rotatable tray ramp rotatably coupled to the internal plate, wherein the first rotatable tray ramp moveable between a first storage position and a first access position;
wherein in the closed position, the at least one splice tray covers the splitter section on the internal plate;
wherein in the open position, the at least one splice tray does not cover at least a portion of the splitter section on the internal plate;
a second rotatable tray ramp rotatably coupled to the internal plate, wherein the second rotatable tray ramp is moveable between a second storage position and a second access position;
at least one patch tray coupled to the second rotatable tray ramp, wherein the at least one patch tray is rotatable about the second rotatable tray ramp between a horizontal position and a vertical position;
wherein when the patch tray is in the vertical position and the rotatable tray ramp is in the storage position, the overlength storage section of the optical enclosure is accessible.

8. The fiber optic terminal of claim 7, wherein the first rotatable tray ramp is arranged at a first angle that ranges from 0° to 120° relative to the internal plate; and
wherein the second rotatable tray ramp is arranged at a second angle that ranges from 0° to 120° relative to the internal plate.

9. The fiber optic terminal of claim 8, wherein in the first storage position, the first angle of the first rotatable tray ramp ranges between 0° and 45° relative to the internal plate;
wherein in the first access position, the first angle of the first rotatable tray ramp ranges between 45° and 120° relative to the internal plate; and
wherein in the second storage position, the second angle of the second rotatable tray ramp ranges between 0° and 45° relative to the internal plate; and
wherein in the second access position, the second angle of the second rotatable tray ramp ranges between 45° and 120° relative to the internal plate.

10. The fiber optic terminal of any of claims 1-9 comprising:
wherein the rotatable tray ramp includes a first channel and a second channel on a first edge and a second edge of the rotatable tray ramp, respectively, and the first channel and the second channel are configured to direct optical fibers to the at least one connection tray that is coupled to the rotatable tray ramp.

11. The fiber optic terminal of claim 10, wherein the first channel and the second channel each further include a plurality of directing guides, wherein each of the plurality of directing guides are configured to direct the optical fibers to a specific tray of the at least one connection tray that is coupled to the rotatable tray ramp.

12. The fiber optic terminal of claim 10 or claim 11, wherein:
the internal plate includes a splitter section configured to receive at least one optical splitter;
at least one splice tray rotatably coupled to the internal plate, wherein the at least one splice tray is rotatable relative to the rotatable tray ramp between a closed position and an open position;
in the closed position, the at least one splice tray covers the splitter section positioned on the internal plate;
in the open position, the at least one splice tray does not cover at least a portion of the splitter section on the internal plate.
